# EUROPEAN PATENT SPECIFICATION

(11) **EP 2 991 501 B1**
(45) Date of publication and mention of the grant of the patent: **22.08.2018**
(21) Application number: 14718407.1
(22) Date of filing: 17.04.2014
(51) Int. Cl.: A23P 30/10, A23G 1/22, A23G 1/30, A23G 1/50, A23G 3/34, A23G 3/50, B44F 1/02, B44F 7/00

(54) **MOLDED FOOD PRODUCT**
GEFORMTES LEBENSMITTELPRODUKT
PRODUIT ALIMENTAIRE MOULÉ

(30) Priority: 19.04.2013 EP 13164428
(43) Date of publication of application: 09.03.2016
(73) Proprietor: Nestec S.A., 1800 Vevey (CH)
(72) Inventor: GROLIMUND, Daniel, CH-3065 Bolligen (CH); KOCH, Markus, CH-1070 Puidoux (CH)
(74) Representative: Lumsden, Stuart Edward Henry
(86) International application number: PCT/EP2014/057853
(87) International publication number: WO 2014/170420

(56) References cited:
- CN-A- 102 940 118
- JP-A- 2005 253 340
- US-A1- 2002 102 332
- US-A1- 2004 170 807

## Description

### FIELD OF THE INVENTION

This invention relates to a molded food product, in particular a fat-based confectionery product such as a chocolate product, having on its surface at least three non-overlapping relief fields, as further defined in the claims, that provide an edible optical element. The invention also relates to a process and a mold for manufacturing such a molded food product.

### BACKGROUND OFTHE INVENTION

It is generally known in the art that consumer appeal is influenced not only by texture and taste of a food product, but also, if not even primarily, by the visual aesthetics of the product. Therefore, the outer appearance and decoration of confections and other food stuffs has been a long standing concern of the food industry, and in particular to producers of confections, chocolates, candies and the like.

One way to enhance this outer appearance is a new trend named "edible holography ", where light effects are created on the food surface, producing images including rainbow-like color patterns, pictures, and changes in color or location of pictures or parts of pictures in dependency of the viewing angle.

The most common way to create light effects on the surfaces of chocolate is to add some material other than chocolate to the ingredients list. Most of the known processes require adding various additive materials to the ingredient list, and/or require subjecting the chocolate to very specific methods in order to obtain and preserve the desired effects.

For example, JP 2005253340 discloses a confectionery product having a corrugated pattern directly on its surface, which is supposed to provide a holographic effect. This pattern is composed of two different types of corrugation fields having identical shape and size, wherein the two different types of corrugation fields differ by the orientation of their corrugations, which is 90°.

WO 01/10464 relates to edible holographic products comprising a core and an outer layer of thermoformable material bearing a microrelief that conveys a holographic image or effect. This extra layer is to be formed from an aqueous solution of a thermoformable food grade material such as modified cellulose, modified food starch, gelatin, waxes or vegetable gums. Additives such as hygroscopic sugar, plasticizers and colorants are added to stabilize the relief, which may negatively affect the texture and taste of the product. Moreover, the layer of material that retains the microrelief is applied onto the core by printing or laminating, thus limiting the number of techniques for producing such holographic elements.

U. S. Patent Application No. 2004/0170725 relates to edible articles that incorporate optical elements such as holographic patterns, and various methods for producing such articles. These methods comprise molding of film forming materials such as cellulose polymers, complex starches and gels for building a substrate, and sealing together a plurality of substrates, each of which has emerged from a relief mold such that their sides on which relief gratings are defined are facing each other to form an optical gap between the optical elements.

U. S. Patent No. 4,668,523 discloses a system for applying high resolution diffraction gratings to confections and other food products to produce edible holograms. The edible holographic element of this patent comprises an organic polymer selected from amino acid polymers and carbohydrates such as cellulose extracts and simple polysaccharides, i.e. sugars. Further ingredients such as plasticizers, softening agents, artificial sweeteners, food colorings and the like are added to the organic polymer for protection of the image and/or to change the flavor and texture of the holographic element.

It should be kept in mind that adding some material other than chocolate to the ingredient list may not only have a potentially detrimental effect of on texture and taste of the product, but that the incorporation of various additives also bares the risk of increasing the allergenic potential of the foodstuff. Moreover, most of the known methods require formation of different substrates, thus making additional sealing steps necessary to build a composite product.

In sum, there still exists a need for food products having improved optical elements such as holographic gratings and patterns that are able to produce visually interesting optical images and effects, wherein such optical elements do not impair the texture, taste and safety of the edible product. Moreover, there is still a need for an easy to perform, time- and cost-saving one-pot process for preparing such food products, which avoids the manufacturing of several separate product layers.

### SUMMARY OF THE INVENTION

These needs are met by the novel and easy to implement technology of the present invention, which provides molded food products, such as confectionery products, e.g. chocolates, that include light refracting effects such as printed patterns, logos and holographic elements on their surface, as well as a mold and a process for manufacturing such products without adding any additive and/or film-forming material to the confectionery mass.

Accordingly, the present invention relates to a molded food product, preferably a confectionery product such as e.g. a chocolate product, presenting on its surface (1a) an optical element (2a) comprising at least three non-overlapping relief fields (3a), each relief field (3a) having at least two parallel straight indentation lines (4) providing an orientation of the relief field (3a), wherein the respective different relief fields (3a) are not in parallel orientation to each other, wherein the depth (5) of the indentation lines (4) is from 0.03mm to 1mm; and the width (6) of the indentation lines (4) is from 0.1mm to 2.0mm.

Another preferred embodiment of the present invention relates to the molded food product according to the first aspect, wherein (i) the cross-sectional profile of the indentation lines (4) is a concave (4a) or convex curve (4b); and/or (ii) the concave (4a) or convex curve (4b) of the indentation lines (4) is characterized by a tangential angle (10) of from 40° to 120°.

In a further preferred embodiment of the first aspect of the invention, the at least two parallel straight indentation lines (4) of the at least three non-overlapping relief fields (3a) are oriented at an angle of at least 10° to each other. In a preferred embodiment of the first or second aspect of the invention, the optical element (2a) comprises from 4 to 200, from 10 to 150, from 20 to 100, or from 30 to 50 relief fields and wherein, preferably, these different relief fields are oriented in at least 5, 6, 7, 8, 9, 10, 15, 20, or 50 different directions.

In another preferred embodiment of the invention, the at least three non-overlapping relief fields (3a) are oriented at an angle of from 15° to 350°, from 20° to 300°, from 30° to 135°, from 45° to 90°, from 50° to 80°, or from 50° to 60° to each other.

In a further preferred embodiment of the invention the depth (5) of the indentation lines (4) is from 0.04mm to 0.5mm, more preferably from 0.04 to 0.1mm, even more preferably from 0.05 to 0.1mm, most preferably from 0.06mm to 0.08mm or from 0.06 to 0.09 mm. In a preferred embodiment the depth of the indentation lines is around 0.07mm.

In another preferred embodiment of invention, the width (6) of the indentation lines (4) is from 0.1mm to 1.0 mm, preferably from 0.15mm to 0.50mm, more preferably from 0.20mm to 0.40mm. In some embodiments the width of the indentation lines is from about 0.20mm to 0.30mm.

In yet another preferred embodiment of the invention, the indentation lines (4) are arranged such that the relief fields (3a) reflect light differently, such that the relief fields (3a) appear with different brightness and/or color.

In another preferred embodiment of the invention, the relief fields (3a) are arranged in a way that they reflect light differently, such that different images are formed depending on the angle of view.

In a particularly preferred embodiment of the invention, the cross-sectional profile of the indentation lines (4) is a concave curve (4a).

In another preferred embodiment of the first or second aspect of the invention, the cross-sectional profile of the indentation lines (4) is a concave (4a) or convex curve (4b) is an arc of circle, wherein the radius (7) of the concave (4a) or convex curve (4b) is from 0.05mm to 1mm, preferably from 0.05mm to 0.5mm, preferably from 0.1 to 0.3mm, and more preferably from 0.1 to 0.2mm.

In another preferred embodiment of the invention, the at least two parallel straight indentation lines (4) of a relief field (3a) are arranged adjacent next to each other, i.e. without any flat, convex or concave portion between them.

In another preferred embodiment of the invention, the at least two parallel straight indentation lines (4) of a relief field (3a) are separated from each other by a convex (8a), concave (8b) or essentially flat portion (8c).

In another preferred embodiment of the invention, the ratio of the width (9) of the essentially flat portion (8c) to the width of the indentation lines (6) is less than about 0.55, preferably less than about 0.4, more preferably less than about 0.3, even more preferably less than about 0.2, and most preferably less than about 0.1.

In another preferred embodiment of the invention, the concave (4a) or convex curve (4b) of the indentation lines (4) is characterized by a tangential angle (10) of from 40° to 90°, preferably from 40° to 80°, more preferably from 45° to 75° and in some preferred embodiments from 50° to 70°.

The present invention also relates to a mold suitable for manufacturing a molded food product, preferably a confectionery product such as e.g. a chocolate product, presenting on its surface (1b) an optical element (2b) comprising at least three non-overlapping gravure fields (3b), each gravure field (3b) having at least two parallel straight engraving lines (20) providing an orientation of the gravure field (3b), wherein the different gravure fields (3b) are not in parallel orientation to each other, wherein (i) the depth (5) of the engraving lines (20) is from 0.03mm to 1mm; and the width (6) of the engraving lines (20) is from 0.1mm to 2.0mm.

Another preferred embodiment of the present invention relates to (i) the cross-sectional profile of the engraving lines (20) is a convex (20a) or concave curve (20b); and/or (ii) the convex (20a) or concave curve (20b) of the engraving lines (20) is characterized by a tangential angle (10) of from 40° to 120°.

In a preferred embodiment of the invention, the at least two parallel straight engraving lines (20) of the at least three non-overlapping gravure fields (3b) are oriented at an angle of at least 10° to each other.

In a preferred embodiment of the invention, the optical element (2b) comprises from 4 to 200, from 10 to 150, from 20 to 100, or from 30 to 50 gravure fields (3b) and wherein, preferably, these different gravure fields (3b) are oriented in at least 5, 6, 7, 8, 9, 10, 15, 20, or 50 different directions.

In another preferred embodiment of the invention, the at least three non-overlapping gravure fields (3b) are oriented at an angle of from 15° to 350°, from 20° to 300°, from 30° to 135°, from 45° to 90°, from 50° to 80°, or from 50° to 60° to each other.

In a further preferred embodiment of the invention, the depth (5) of the engraving lines (20) is from 0.04mm to 0.5mm, more preferably from 0.04 to 0.1mm, even more preferably from 0.05 to 0.1mm, most preferably from 0.06mm to 0.08mm or from 0.06 to 0.09 mm. In a preferred embodiment the depth of the engraving lines is around 0.07mm.

In another preferred embodiment of the invention, the width (6) of the engraving lines (20) is from 0.1mm to 1.0 mm, preferably from 0.15mm to 0.50mm, more preferably from 0.20mm to 0.40mm. In some embodiments the width of the engraving lines is from about 0.20mm to 0.30mm.

In a particularly preferred embodiment of the invention, the cross-sectional profile of the engraving lines (20) is a convex curve (20a) which is an arc of circle, wherein the radius (7) of the convex (20a) or concave curve (20b) is from 0.05mm to 1mm, preferably from 0.05mm to 0.5mm, preferably from 0.1 to 0.3mm, and more preferably from 0.1 to 0.2mm.

In another preferred embodiment of the invention, the at least two parallel straight engraving lines (20) of a gravure field (3b) are arranged adjacent next to each other, i.e. without any flat, convex or concave portion between them.

In another preferred embodiment of the invention, the at least two parallel straight engraving lines (20) of a gravure field (3b) are separated from each other by a concave (21a), convex (21b) or essentially flat portion (21c).

In another preferred embodiment of the invention, the ratio of the width (9) of the essentially flat portion (21c) to the width of the engraving lines (6) is less than about 0.55, preferably less than about 0.4, more preferably less than about 0.3, even more preferably less than about 0.2, and most preferably less than about 0.1.

In another preferred embodiment of the invention, the convex (20a) or concave curve (20b) of the engraving lines is characterized by a tangential angle (10) of from 40° to 90°, preferably from 40° to 80°, more preferably from 45° to 75° and in some preferred embodiments from 50° to 70°.

The invention relates to a process for manufacturing a molded food product, preferably a confectionery product such as e.g. a chocolate product, comprising applying on the surface (1a) of said product an optical element (2a) as defined above for the invention.

In a preferred embodiment of the present invention, the process according to the invention comprises the steps of a. Providing a food product at a temperature at which it is in liquid state; b. Pouring the food material into a mold of the invention; c. Solidifying the food material by cooling; and d. Removing the solidified food product from the mold.

The present invention relates to a process for preparing a changing image on the surface of a molded food product, wherein the molded food product is a product according to any one of the claims 1 to 4, said process comprising the steps of a) providing an image; b) converting the image into an optical element (2b) representing the image by: (i) dividing the image into different colour fields or shades, (ii) assigning to each colour or shade one or more gravure fields (3b) of identical orientation, wherein the orientation of a gravure field (3b) is determined by the orientation of the at least two parallel straight engraving lines (20) comprised in said gravure field (3b), such that each colour or shade determines a certain orientation of the gravure field (3b), and the parallel straight engraving lines (20) assigned to gravure fields (3b) of different colours or shades do not have the same orientation, c) preparing a mold according to the invention; and d) using the mold for preparing a molded food product.

In another preferred embodiment of the invention, step d) of using the mold for preparing a molded food product is performed according to the fifth aspect of the invention or its preferred embodiment. Other aspects and embodiments of the present invention are described below, and/or are depicted in the drawings.

### BRIEF DESCRIPTION OF THE DRAWINGS

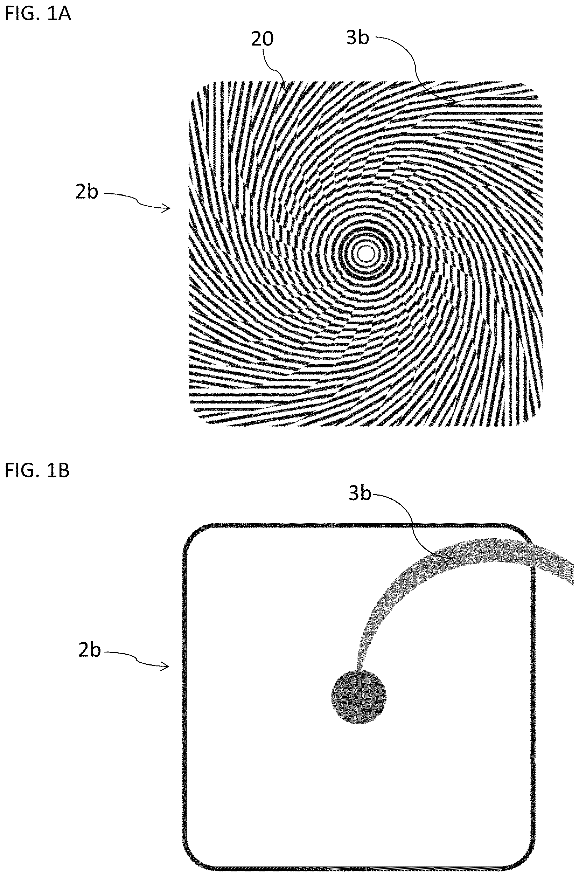

**FIG. 1A** is a schematic top view of an exemplary optical element of a mold according to the invention providing a radial spiral image. Fig. 1A displays various gravure fields with parallel straight engraving lines.
**FIG. 1B** shows a single gravure field of the optical element of FIG. 1A.

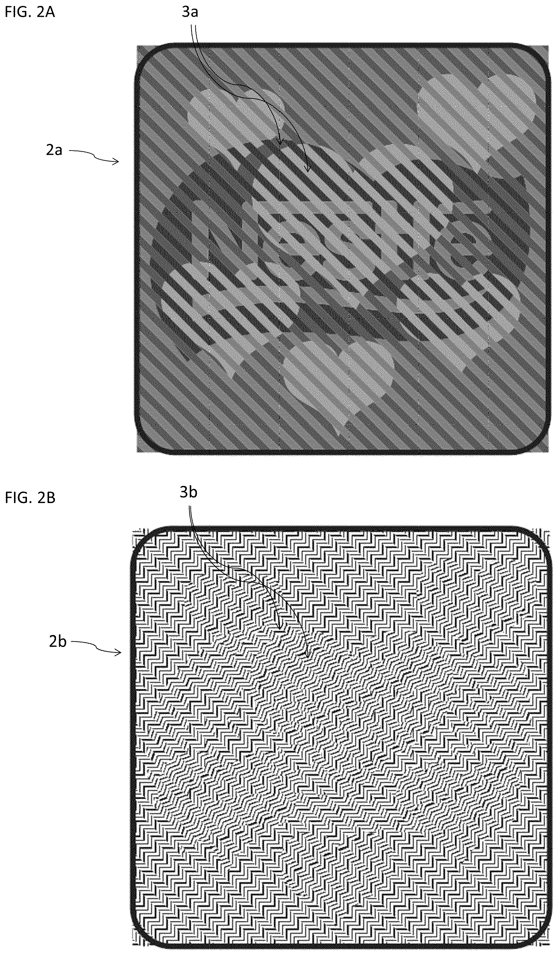

**FIG. 2A** is a schematic top view of an exemplary optical element of a molded food product according to the invention providing a changing image product logo, wherein the image changes between a product logo pattern and several heart shaped patterns depending on the viewing angle. Fig. 2A displays a multitude of relief fields.
**FIG. 2B** shows the indentation lines of the relief fields of the optical element of FIG. 2A.

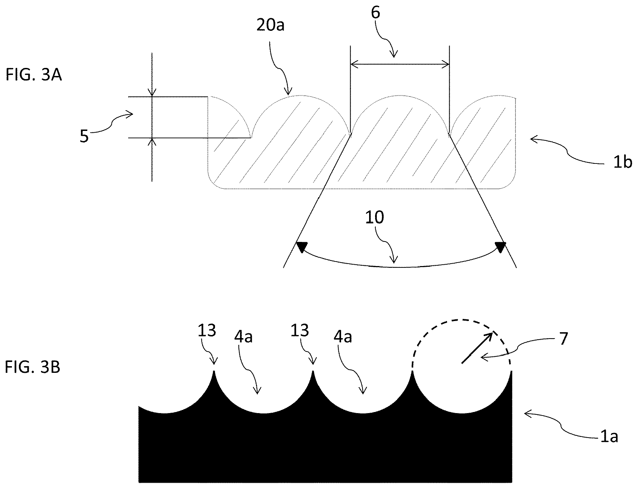

**FIG. 3** is a schematic cross-sectional view of one of the relief fields of the molded food product of the invention (see FIG. 3B) and a schematic cross-sectional view of the corresponding gravure field of the mold (see FIG. 3A), wherein the at least two parallel straight indentation lines of a relief field are arranged adjacent next to each other, i.e. without any flat, convex or concave portion between them, and wherein the cross-sectional profile of each indentation line of the relief field of the molded product is a concave curve (see FIG. 3B).

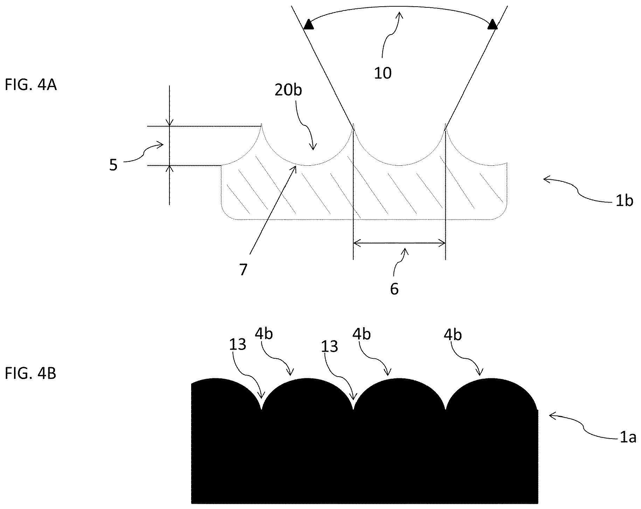

**FIG. 4** is a schematic cross-sectional view of one of the relief fields of the molded food product of the invention (see FIG. 4B) and a schematic cross-sectional view of the corresponding gravure field of the mold (see FIG. 4A), wherein the at least two parallel straight indentation lines of a relief field are arranged adjacent next to each other, i.e. without any flat, convex or concave portion between them, and wherein the cross-sectional profile of each indentation lines of the relief field of the molded product is a convex curve (see FIG 4B).

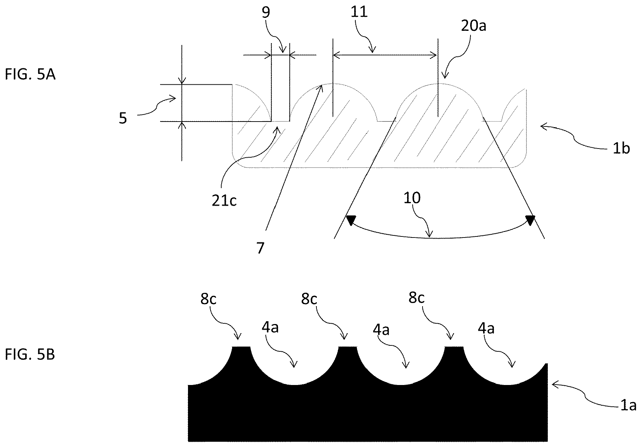

**FIG. 5** is a schematic cross-sectional view of one of the relief fields of the molded food product of the invention (see FIG. 5B) and a schematic cross-sectional view of the corresponding gravure field of the mold (see FIG. 5A), wherein the cross-sectional profile of each indentation line is a concave curve, and the at least two parallel straight indentation lines of a relief field are separated from each other by an essentially flat portion.

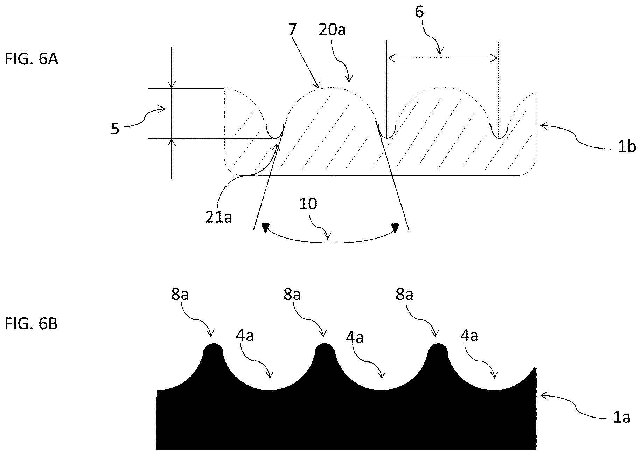

**FIG. 6** is a schematic cross-sectional view of one of the relief fields of the molded food product of the invention (see FIG. 6B) and a schematic cross-sectional view of the corresponding gravure field of the mold (see FIG. 6A), wherein the cross-sectional profile of each indentation line is a concave curve, and the at least two parallel straight indentation lines of a relief field are separated from each other by a convex portion.

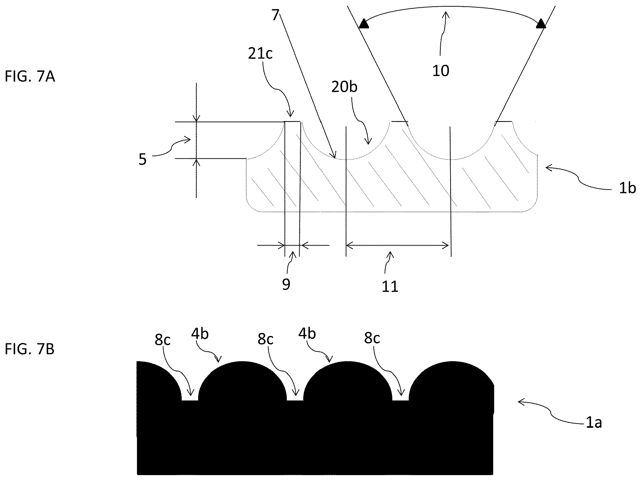

**FIG. 7** is a schematic cross-sectional view of one of the relief fields of the molded food product of the invention (see FIG. 7B) and a schematic cross-sectional view of the corresponding gravure field of the mold (see FIG. 7A), wherein the cross-sectional profile of each indentation line is a convex curve, and the at least two parallel straight indentation lines of a relief field are separated from each other by an essentially flat portion.

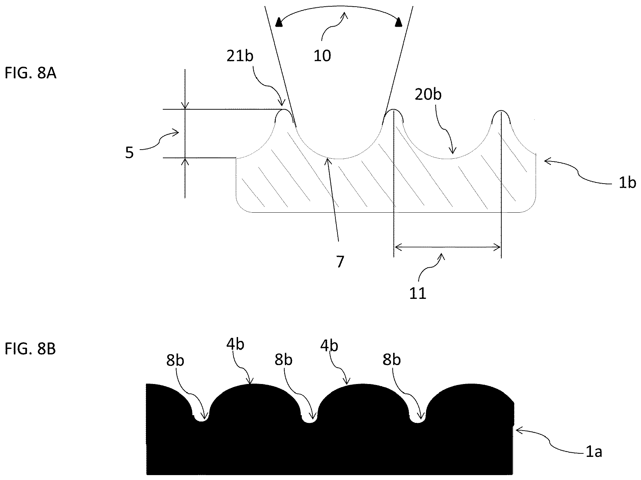

**FIG. 8** is a schematic cross-sectional view of one of the relief fields of the molded food product of the invention (see FIG. 8B) and a schematic cross-sectional view of the corresponding gravure field of the mold (see FIG. 8A), wherein the cross-sectional profile of each indentation line is a convex curve, and the at least two parallel straight indentation lines of a relief field are separated from each other by a concave portion.

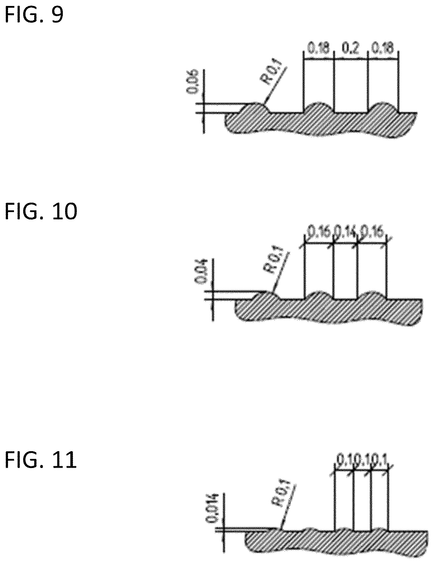

**FIG. 9 to 15** are schematic cross-sectional views of the molds used for preparing the chocolate products of the Examples (further explanations are found in the example section).

### DETAILED DESCRIPTION OF THE INVENTION

The present invention provides a molded food product, preferably a confectionery product such as e.g. a chocolate product, presenting on its surface (1a) an optical element (2a) comprising at least three non-overlapping relief fields (3a), each relief field (3a) having at least two parallel straight indentation lines (4) providing an orientation of the relief field (3a), wherein the respective different relief fields (3a) are not in parallel orientation to each other, wherein the depth (5) of the indentation lines (4) is from 0.03mm to 1mm; and the width (6) of the indentation lines (4) is from 0.1mm to 2.0mm.

In the context of the present invention, a molded food product is to be understood as a product having any desired three-dimensional shape and that is produced by any conventional molding process. As commonly understood, molding is the casting of liquid chocolate into molds (e.g. plastic or metal) followed by cooling and demolding.

The term "food product", as used herein, refers to food, confections, candies, and medicines that may be safely consumed by humans or animals, and that are opaque, transparent or semi-transparent. In a preferred embodiment of the present invention, the food product is a fat-based confectionery product such as a chocolate or a chocolate-like composition, e.g. compound coating, praline, truffle, etc.. The chocolates and chocolate-like compositions of the present invention may be in any form, e.g. a solid block, a hollow shell, or a shell filled with a confectionery material such as fondant, fudge or soft caramel.

It has been surprisingly found that a particular ratio of depth (5) and width (6) of the indentation lines (4) is required to obtain a desired optical effect, e.g. a light refracting effect. The particular ratios can be derived from the particular aspects and embodiments of the invention. Furthermore, it has been surprisingly found that a specific selection of angles between the indentation lines (4) of different relief fields (3a) further improves the invention. Finally, it was unexpectedly found that the arrangement of at least three non-overlapping relief fields (3a) on the product surface (1a) itself allows to produce superior optical effects.

In one preferred embodiment the surface of the food product on which the optical element of the invention is present is a substantially flat surface. However in other embodiments the optical image may be present on a curved surface.

### Optical Element

In the context of the present invention, the term "optical element" or "optical elements" refers to any type of surface structure that provides a visually appealing image and/or effect, e.g. concave/convex light reflection effects, giving changing images and/or holographic-like effects.

As used herein, the term "image" or "images" refers to any kind of visible pattern, such as a picture, drawing, figure, logo, character, design, reflection, etc.

A changing image effect may be generally achieved by creating a three-dimensional surface design having specific diffraction gratings that allow the light to refract from the surface while being scattered by the gratings. The embossed design can be seen at certain angles. When the surface is viewed from different perspectives, different parts will appear in different colours or shades, creating a rainbow or other optical effect with the design still visible.

### Relief fields

The optical element (2a) of the present invention comprises at least three non-overlapping relief fields (3a), each relief field (3a) having at least two parallel straight indentation lines (4). As used herein, a relief field (3a) is a defined area on the surface (1a) of the food product, which is characterized by a defined shape and area size. Depending on the image or effect to be achieved, the optical element (2a) comprises at least three relief fields (3a), e.g. from at least three up to any suitable number, and preferably a multiple number such as from 5 to 200, from 10 to 150, from 20 to 100, from 30 to 50, or any integer number within the above described ranges. In a further embodiment the optical element (2a) may comprise 2, 3, 5, 10, 20, 30, 40, 50, 75, 100 or 200 relief fields (3a).

The relief fields (3a) of the present invention can be of any shape and size, depending on the image and/or effect that is desired to be achieved. By way of non-limiting example, Fig. 2 shows a changing image product logo, wherein the image changes between a product logo pattern and several heart shaped patterns depending on the viewing angle (Fig. 2A). As can be seen from Fig. 2B, this effect is achieved by a particular linear arrangement of relief fields (3a) having parallel straight indentation lines (4) of a certain angle. The particular patterns are generated by a corresponding arrangement of different relief fields (3a), while the different images are generated by varying the angle of the indentation lines (4) of said relief fields (3a).

As can be derived from the above example, the multiple relief fields (3a) of the optical element (2a) of the product are oriented at different angles, i.e. orientations, to produce the desired effect and images. As used herein, "the angle" or "orientation" of three relief fields "A" and "B" is determined by the angle of the parallel straight indentation lines (4) of relief field "A" to the angle of the parallel straight indentation lines (4) of relief field "B" in relation to each other.

Typically, the indentation lines (4) of the at least three relief fields (3a) are oriented at an angle of at least 10°, e.g. from 15° to 350°, from 20° to 300°, from 30° to 135°, from 45° to 90°, from 50° to 80°, or from 50° to 60° to each other.

The number of the indentation lines (4) in each relief field (3a) may be from at least three up to any suitable number, e.g. from 5 to 200, 10 to 150, 20 to 100, or 30 to 50.

It is preferred that the indentation lines (4) are arranged such that the multiple relief fields (3a) reflect light differently, such that the different relief fields (3a) appear with different brightness and/or colour and/or shade and/or such that different images are formed depending on the angle of view.

### Indentation lines

As used herein, indentation lines (4) are parallel straight deepenings or elevations (protrusions) in the product surface (1a), which may be a plain or curved surface, wherein said deepenings or elevations may have any length depending of the desired image or effect.

In a preferred embodiment of the present invention, the cross-sectional profile of each indentation line (4) is a concave (4a) or convex curve (4b), the concave (4a) or convex curve (4b) is an arc of circle.

As used herein, the radius (7) is defined as the radius of the circle of the completed curve of the indentation line (4), see Fig. 3B. In Fig. 4-8B, the radius (7) is correspondingly shown for the convex or concave curve of the engraving line (20) of the corresponding mold. Preferably, the radius (7) of the concave (4a) or convex curve (4b) is from 0.05mm to 1mm, preferably from 0.05mm to 0.5mm, preferably from 0.1 to 0.3mm, and more preferably from 0.1 to 0.2mm. The depth (5) of the concave (4a) or convex curve (4b) of the indentation line (4) is from 0.03mm to 1mm, preferably from 0.04mm to 0.5mm, more preferably from 0.04 to 0.1mm, even more preferably from 0.05 to 0.1mm, such as from 0.06mm to 0.08mm. In this context, the depth (5) of the curve of the indentation line (4) as well as of the engraving line (20) is defined as the maximal distance between the highest and the lowest point of the curve when measured perpendicular to the product surface (1a) and the mold surface (1b), respectively. In the attached Figures, the depth (5) is exemplified on the mold (see Fig. 3A to 8A). However, the skilled person will appreciate that the depth of the engraving line (20) and the height of the corresponding indentation line (4) is identical, and vice versa.

Furthermore, the width (6) of the concave (4a) or convex curve (4b) is from 0.1mm to 2.0mm, preferably is from 0.1mm to 1.0 mm, preferably from 0.15mm to 0.50mm, more preferably from 0.20mm to 0.40mm, more preferably from 0.20 to 0.30 mm and in some preferred embodiments from 0.22mm to 0.36mm.

As used herein, the width (6) of the concave (4a) or convex curve (4b) of the indentation line (4) as well as of the engraving line (20) is defined as the maximum width of the curve when measured perpendicular to the longitudinal direction. In the attached Figures, the width (6) is exemplified on the mold (see Fig. 3A to 8A). However, the skilled person will appreciate that the width (6) of the engraving line (20) and that of the corresponding indentation line (4) is identical, and vice versa.

If the indentation lines (4) of a relief field (3a) are arranged adjacent next to each other, i.e. without any separating portion (8) between them, this maximum width is measured between the highest or lowest points (13) of adjacent indentation lines (4) (see Fig. 3A and 4A). If the indentation lines (4) of a relief field (3a) are separated by a convex (8a) or concave portion (8b), this maximum width (6) is measured between the highest points of adjacent convex separating portions (8a), or between the deepest points of adjacent concave separating portions (8b), respectively (see Fig. 6A and 8A).

Parallel arranging the straight indentation lines (4) leads to a formation of ridges between these lines, and thus to a specific grating of the relief fields (3a). The separating portion (8) between the indentation lines (4) constituting the top of these ridges may be shaped as a convex (8a), concave (8b) or essentially flat portion (8c) or plane, which depending on the distance of the parallel indentation lines (4) may vary in width (9).

In the attached Figures, the width (9) is exemplified on the mold (see Fig. 5A and 7A). However, the skilled person will appreciate that the width (9) of the separating portion (21c) and that of the corresponding separating portion (8c) is identical, and vice versa.

It is preferred that the width (9) of the separating portion (21c) and that of the corresponding separating portion (8c) is from 0.01mm to 1.0mm, preferably from 0.01mm to 0.5 mm, more preferably from 0.01mm to 0.1mm.

If the cross-sectional profile of the indentation lines (4) is a concave curve (4a), the separating portion (8) between these lines may be convex (8a) or essentially flat (8c), see Figures 5B and 6B. If the cross-sectional profile of the indentation lines (4) is a convex curve (4b), the separating portion (8) between these lines may be concave (8b) or essentially flat (8c), see Figures 7B and 8B.

In one preferred embodiment, the separating portion (8) is essentially flat.

In a preferred embodiment of the molded food product, the ratio of the width (9) of the essentially flat portion (8c) between the indentation lines (4) to the width of the indentation lines (6) is less than about 0.55, preferably less than about 0.4, more preferably less than about 0.3, even more preferably less than about 0.2, and most preferably less than about 0.1.

As used herein, the width of the indentation lines (4) is identical to the width (6) of the concave (4a) or convex curve (4b) of the indentation line (4). In those embodiments, wherein the indentation lines are separated by a convex (8a), concave (8b) or essentially flat portion (8c), the width of the indentation lines is calculated by subtracting the width (9) of the separating portion (8) between the indentation lines (4) from the maximum distance (11) between the highest or lowest points of the concave (4a) or convex curves (4b) of adjacent indentation lines (as exemplified in Figures 5A, and 7A for the corresponding mold).

In one particularly preferred embodiment, the at least two parallel straight indentation lines (4) of a relief field (3a) are arranged adjacent next to each other, i.e. without any convex (8a), concave (8b) or essentially flat separating portion (8) between them. In this preferred case, the ratio of the width (9) of the convex (8a), concave (8b) or essentially flat portion (8c) between the indentation lines (4) to the width of the indentation lines (6) is preferably less than 0.01.

In yet another preferred embodiment of the molded food product, the concave (4a) or convex curve (4b) of the indentation lines (4) is characterized by a tangential angle (10) of from 40° to 120°, preferably from 40° to 90°, preferably from 40° to 80°, more preferably from 45° to 75° and in some preferred embodiments from 50° to 80° or 50° to 70°. Preferably, said angle can be about 45°, 50°, 60°, 70°, 75°, or 80° or less than about 45°, 50°, 60°, 70°, 75°, or 80°.

The tangential angle (10) is determined as the angle between the tangents of the concave (4a) or convex curve (4b) of the indentation line (4). These tangents are constructed at the inflection point between the convex curve of the engraving line (4b) and the concave curve of the separating portion (8a), or between the concave curve of the engraving line (4a) and the convex curve of the separating portion (8b), respectively. Thus, each curve has two tangents (see Fig. 6A and 8A). In these Figures, the angle (10) is exemplified on the mold. However, the skilled person will appreciate that the angle (10) of the convex (4b) or concave engraving line (4a) of the product and the angle (12) of the corresponding concave (20b) or convex separating portion (20a) of the mold is identical, and vice versa.

In case that the separation portion is flat (8c) the angle between the two tangents is determined as follows: The tangential angle (10) is determined as the angle between the tangents of the concave (4a) or convex curve (4b) of the indentation line (4). These tangents are constructed at the point where the curve intersects with the flat portion (8c) of the ridge. Thus, each curve has two tangents (see Fig. 5A and 7A). In these Figures, the angle (10) is exemplified on the mold. However, the skilled person will appreciate that the angle (10) between the tangents of the concave (4a) or convex curve (4b) of the indentation line (4) of the product and the angle (10) of the corresponding concave (20b) or convex curve (20a) of the engraving line (20) of the mold is identical, and vice versa.

### Mold

The present invention further provides a mold suitable for manufacturing a molded food product, preferably a confectionery product such as e.g. a chocolate product, presenting on its surface (1b) an optical element (2b) comprising at least three non-overlapping gravure fields (3b), each gravure field (3b) having at least two parallel straight engraving lines (20) providing an orientation of the gravure field (3b), wherein the different gravure fields (3b) are not in parallel orientation to each other, wherein the depth (5) of the engraving lines (20) is from 0.03mm to 1mm; and the width (6) of the engraving lines (20) is from 0.1mm to 2.0mm.

For the present invention, any mold conventionally used in food industry can be used. In accordance with an exemplary embodiment of the present invention, one or more relief-type molds are utilized to produce a food product with incorporated optical elements. Each relief-type mold includes one or more diffractive, holographic or lenticular relief patterns or gratings on the surface of the mold.

The shape and dimensions of the molds used in connection with the present invention will depend on many factors, including, but not limited to, spatial constraints, the type of food products being produced, etc. The present invention is applicable, however, to embodiments in which anywhere from one mold to a multiplicity of molds are employed simultaneously or over a staggered time frame to produce one or more edible articles.

The molds may be either metal-, rubber-, plastic-, or wax-based, but, preferably, are made of a material that facilitates removal of the dried substrate from the mold without the former adhering to (i.e., sticking to) the latter. Exemplary plastic-based molds include those made of silicone, polytetrafluoroethylene or polyethylene terephthalate, and an exemplary metal-based mold is made of a nickel-based material.

Typically, the mold is shaped in way that the optical element (2b) presented on its surface (1b) is the exact negative of the optical element (2a) comprised in the molded food product of the invention.

### Gravure fields

The optical element (2b) of the mold comprises at least three non-overlapping gravure fields (3b), each gravure field (3b) having at least two parallel straight engraving lines (20). As used herein, a gravure field (3b) is a defined area on the surface (1b) of the mold, which is characterized by a defined shape and area size. Depending on the image or effect to be achieved, the optical element (2b) comprises three gravure fields (3b), e.g. from at least three up to any suitable number, and preferably a multiple number such as from 5 to 200, from 10 to 150, from 20 to 100, from 30 to 50, or any integer number within the above described ranges. In a further embodiment the optical element (2b) may comprise 2, 3, 5, 10, 20, 30, 40, 50, 75, 100 or 200 gravure fields (3b).

The gravure fields (3b) of the present invention can be of any shape and size, depending on the image and/or effect that is desired to be achieved. By way of non-limiting example, Fig. 1 displays an embodiment of the present invention in the form of a spiral image hologram. In order to arrive at a spiral appearance, the particular gravure fields (3b) are arcuate shaped (Fig. 1A) and arranged concentrically around a single midpoint. As can be seen from Figure 1B, each of these gravure fields (3b) is characterized by a specific grating composed of parallel straight engraving lines (20), wherein the engraving lines (20) of neighbored gravure fields (3b) are oriented around the midpoint and their orientation differs by an angle of at least 10° in relation to each other.

As can be derived from the above example, the multiple gravure fields (3b) of the optical element (2b) of the mold are oriented at different angles, i.e. orientations, to produce the effect and image. As used herein, "the angle" or "orientation" of two gravure fields "A" and "B" is determined by the angle of the parallel straight engraving lines (20) of gravure field "A" to the angle of the parallel straight engraving lines (20) of gravure field "B" in relation to each other.

Typically, the engraving lines (20) of the at least two gravure fields (3b) form an angle of at least 10°, e.g. from 15° to 350°, from 20° to 300°, from 30° to 135°, from 45° to 90°, from 50° to 80°, or from 50° to 60°.

The number of the engraving lines (20) in each gravure field (3b) may be from at least two up to any suitable number, e.g. from 5 to 200, 10 to 150, 20 to 100, or 30 to 50.

It is preferred that the engraving lines (20) are arranged such that the multiple gravure fields (3b) reflect light differently, such that the different gravure fields (3b) appear with different brightness and/or colour and/or shade and/or such that different images are formed depending on the angle of view.

### Engraving lines

As used herein, engraving lines (20) are parallel straight deepenings or elevations (protrusions) in the mold surface (1b), which may be a plain or curved surface, wherein said deepenings or elevations may have any length depending of the desired image or effect.

In a preferred embodiment of the present invention, the cross-sectional profile of the engraving lines (20) is a convex (20a) or concave curve (20b) which is an arc of a circle.

Preferably, the radius (7) of the convex (20a) or concave curve (20b) is from 0.05mm to 1mm, preferably from 0.05mm to 0.5mm, preferably from 0.1 to 0.3mm, and more preferably from 0.1 to 0.2mm.

Also preferably, the depth (5) of the convex (20a) or concave curve (20b) of the engraving line (20) is from 0.03mm to 1mm, preferably from 0.04mm to 0.5mm, more preferably from 0.04 to 0.1mm, even more preferably from 0.05 to 0.1mm, most preferably from 0.06mm to 0.08mm or from 0.06 to 0.09 mm.

Furthermore, it is preferred that the width (6) of the convex (20a) or concave curve (20b) is from 0.1mm to 2.0mm, preferably from 0.1mm to 1.0 mm, preferably from 0.15mm to 0.50mm, more preferably from 0.20mm to 0.40mm, in some preferred embodiments from 0.22mm 0.36mm.

Parallel arranging the straight engraving lines (20) leads to a formation of ridges between these lines, and thus to a specific grating of the gravure fields (3b). The separating portion (21) between the engraving lines (20) constituting the top of these ridges may be shaped as a concave (21a), convex (21b) or essentially flat portion (21c) or plane, which depending on the distance of the parallel engraving lines (20) may vary in width (9).

If the cross-sectional profile of the engraving lines (20) is a concave curve (20b), the separating portion (21) between these lines may be convex (21b) or essentially flat (21c), see Figures 7A and 8A.

If the cross-sectional profile of the engraving lines (20) is a convex curve (20a), the separating portion (21) between these lines may be concave (21a) or essentially flat (21c), see Figures 5A and 6A.

In a preferred embodiment of the mold, the ratio of the width (9) of the essentially flat portion (21c) between the engraving lines (20) to the width of the engraving lines (6) is less than about 0.55, preferably less than about 0.4, more preferably less than about 0.3, even more preferably less than about 0.2, and most preferably less than about 0.1.

In one particularly preferred embodiment, the at least two parallel straight engraving lines (20) of a gravure field (3b) are arranged adjacent next to each other, i.e. without any convex (21b), concave (21a) or essentially flat separating portion (21c) between them.

In yet another preferred embodiment of the mold, the convex (20a) or concave curve (20b) of the engraving lines (20) is characterized by a tangential angle (10) of from 40° to 120°, from 40° to 90°, preferably from 40° to 80°, more preferably from 45° to 75° and in some preferred embodiments from 50° to 70°.

In one preferred embodiment, the separating portion (21c) between the at least two parallel straight engraving lines (20) of a gravure field (3b) is flat.

In case that the separation portion is flat (21c) the angle between the two tangents is determined as follows: The tangential angle (10) is determined as the angle between the tangents of the concave convex (20a) or concave curve (20b) of the engraving line (20). These tangents are constructed at the point where the curve intersects with the flat portion (21c) of the ridge. Thus, each curve has two tangents (see Fig. 5A and 7A).

### Process for manufacturing

The invention further relates to a process for manufacturing a molded food product, preferably a confectionery product such as e.g. a chocolate product, comprising applying on the surface (1a) of said product an optical element (2a) as defined above.

The molding of the food product can be carried out by conventional molding processes, such as chocolate molding processes, well-known to the person skilled in the art.

This process may comprise the steps of a. Providing a food product at a temperature at which it is in liquid state; b. Pouring the food material into a mold of the invention; c. Solidifying the food material by cooling; and d. Removing the solidified food product from the mold.

For liquid chocolate and/or some other of fat based masses a Tempering process is generally carried out before depositing into the mould cavity. The tempering process is a conventional process in chocolate making and it ensures that the cocoa butter or other confectionery fat constituents are seeded and that the chocolate or non-chocolate mass will set in a stable condition with a good permanent color and gloss.

Molding of fat-based confectionery is conventionally carried out by depositing tempered liquid chocolate or fat based masses like compound coatings into metal or plastic molds. The temperature at which the food product is deposited into the mould is sufficiently high for the product to remain liquid during the depositing. For instance tempered liquid chocolate is generally deposited into moulds at a temperature in the range of about 28 to 33°C and compound coating is generally deposited into moulds at a temperature in the range of about 28-45°C. This is followed by an efficient shaking/vibration to eliminate any bubbles/ air traps in the liquid mass before the cooling step.

The finished chocolates may be a solid block, a hollow shell, or a shell filled with a confectionery mass such as praline, soft caramel, ganache, fondant or any of the filling masses used in confections. Furthermore, the present invention relates to a process for preparing a changing image on the surface of a molded food product, wherein the molded food product is a product according to any one of claims 1 to 4, said process comprising the steps of a) providing an image; b) converting the image into an optical element (2b) representing the image by: (i) dividing the image into different colour fields or shades, (ii) assigning to each colour or shade one or more gravure fields (3b) of identical orientation, wherein the orientation of a gravure field (3b) is determined by the orientation of the at least two parallel straight engraving lines (20) comprised in said gravure field (3b), such that each colour or shade determines a certain orientation of the gravure field (3b), and the parallel straight engraving lines (20) assigned to gravure fields (3b) of different colours or shades do not have the same orientation, c) preparing a mold according to the invention; and d) using the mold for preparing a molded food product.

In the inventive process, the optical elements (2a) and (2b), gravure fields (3a) and (3b), indentation lines (4) and engraving lines (20) are defined as set out above. Also, generally, the term food product is to be understood as defined above. Preferably, the molded food product is the product according to the present invention.

The following examples are provided to further illustrate the present invention. They are not intended to be limiting the scope of the present invention.

### EXAMPLES

### Example 1: Spiral image hologram

A chocolate is prepared using a mold. The mold used for preparing the chocolate product is shown in Fig. 1. Therein, the particular gravure fields are arcuate shaped (Fig. 1B) and arranged concentrically around a single midpoint (Fig. 1A and 1B). As can be seen from this Figure, each of these gravure fields is characterized by a specific grating composed of parallel straight engraving lines, wherein the engraving lines of neighbored gravure fields are rotated around the midpoint by an angle of 10°.

The optical effect of an animated/changing spiral image, with the image changing on angle of view is obtained.

### Reference Example 2

A chocolate was formed using a mold, wherein the at least two parallel straight engraving lines are separated from each other by an essentially flat portion, wherein the ratio of the width of the flat portion to the width of the engraving lines is 0.2/0.18=1.11 (see Fig. 9).

Optical effect is not obtained.

### Reference Example 3

A chocolate was formed using a mold, wherein the at least two parallel straight engraving lines are separated from each other by an essentially flat portion, wherein the ratio of the width of the flat portion to the width of the engraving lines is 0.14/0.16=0.88 (see Fig. 10).

Optical effect is not obtained.

### Reference Example 4

A chocolate was formed using a mold, wherein the at least two parallel straight engraving lines are separated from each other by an essentially flat portion, wherein the ratio of the width of the flat portion to the width of the engraving lines is 0.1/0.1=1 (see Fig. 11).

Optical effect is not obtained.

### Example 5

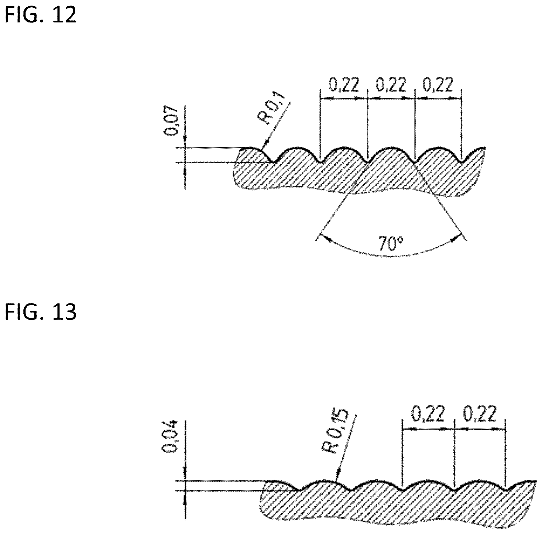

A chocolate was formed using a mold, wherein the at least two parallel straight engraving lines of a gravure field are arranged adjacent next to each other, i.e. essentially without any flat, convex or concave portion between them and the width of the engraving lines is 0.22 mm (see Fig. 12 and Fig. 13).

The optical effect of an animated/changing image, with the image changing on angle of view is obtained.

### Example 6

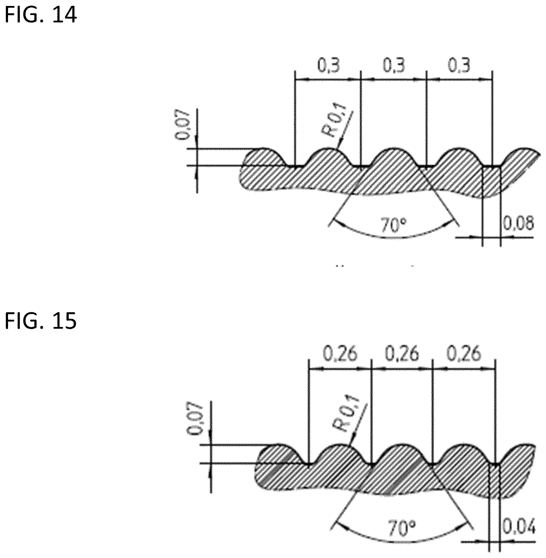

A chocolate was formed using a mold, wherein the at least two parallel straight engraving lines are separated from each other by an essentially flat portion, wherein the ratio of the width of the flat portion to the width of the engraving lines is 0.08/0.3= 0.27% (see Fig. 14)

The optical effect of an animated/changing image, with the image changing on angle of view is obtained.

### Example 7

A chocolate was formed using a mold, wherein the at least two parallel straight engraving lines are separated from each other by an essentially flat portion, wherein the ratio of the width of the flat portion to the width of the engraving lines is 0.04/0.26= 0.15 (see Fig. 15).

The optical effect of an animated/changing image, with the image changing on angle of view is obtained.

### Example 8

A chocolate was formed using a mold, wherein the at least two parallel straight engraving lines are separated from each other by a convex separating portion, wherein the width of the engraving lines is 0.22 and the tangential angle of the convex portion is 50° (see Fig. 16).

The optical effect of an animated/changing image, with the image changing on angle of view is obtained.

## Claims

1. Molded food product, preferably a fat-based confectionery product such as e.g. a chocolate product, presenting on its surface (1a) an optical element (2a) comprising at least three non-overlapping relief fields (3a), each relief field (3a) having at least two parallel straight indentation lines (4) providing an orientation of the relief field (3a), wherein the respective different relief fields (3a) are not in parallel orientation to each other; and wherein the depth (5) of the indentation lines (4) is from 0.03mm to 1mm; and the width (6) of the indentation lines (4) is from 0.1mm to 2.0mm.

2. Molded food product according to claim 1, wherein the at least two parallel straight indentation lines (4) of the at least three non-overlapping relief fields (3a) are oriented at an angle of at least 10° to each other.

3. Molded food product according to any one of claims 1 or 2, wherein the indentation lines (4) are arranged such that the three relief fields (3) reflect light differently, such that the three different relief fields (3) appear with different brightness and/or color.

4. Molded food product according to any one of claims 1 to 3, wherein the at least three relief fields (3) are arranged in a way that they reflect light differently, such that different images are formed depending on the angle of view.

5. Molded food product according to any one of claims 1 to 4, wherein
(i) the cross-sectional profile of the indentation lines (4) is a concave (4a) or convex curve (4b); and/or
(ii) the concave (4a) or convex curve (4b) of the indentation lines (4) is **characterized by** a tangential angle (10) of from 40° to 120°, where the tangential angle (10) is determined as the angle between the tangents of the concave (4a) or convex curve (4b) of the indentation line (4) constructed at the inflection point between the convex curve of the engraving line (4b) and the concave curve of the separating portion (8a), or between the concave curve of the engraving line (4a) and the convex curve of the separating portion (8b), respectively.

6. Mold suitable for manufacturing a molded food product, preferably a confectionery product such as e.g. a chocolate product, presenting on its surface (1b) an optical element (2b) comprising at least three non-overlapping gravure fields (3b), each gravure field (3b) having at least two parallel straight engraving lines (20) providing an orientation of the gravure field (3b), wherein the different gravure fields (3b) are not in parallel orientation to each other; and wherein
the depth (5) of the engraving lines (20) is from 0.03mm to 1mm; and the width (6) of the engraving lines (20) is from 0.1mm to 2.0mm.

7. Mold according to claim to 6, wherein
(i) the cross-sectional profile of the engraving lines (20) is a convex (20a) or concave curve (20b); and/or
(ii) the convex (20a) or concave curve (20b) of the engraving lines (20) is **characterized by** a tangential angle (10) of from 40° to 120°, where the tangential angle (10) is determined as the angle between the tangents of the concave (20b) or convex curve (20a) of the indentation line (4) constructed at the inflection point between the convex curve of the engraving line (4b) and the concave curve of the separating portion (8a), or between the concave curve of the engraving line (4a) and the convex curve of the separating portion (8b), respectively.

8. Process for manufacturing a molded food product, preferably a confectionery product such as e.g. a chocolate product, comprising applying on the surface (1a) of said product an optical element (2a) as defined in any one of claims 1 to 5.

9. Process according to claim 8, comprising the steps
a. Providing a food product at a temperature at which it is in liquid state;
b. Pouring the food material into a mold according to any one of claims 6 to 7;
c. Solidifying the food material by cooling; and
d. Removing the solidified food product from the mold.

10. Process for preparing a changing image on the surface of a molded food product, wherein the molded food product is a product according to any one of claims 1 to 4, said process comprising the steps of
a) providing an image;
b) converting the image into an optical element (2b) representing the image by:
(i) dividing the image into different colour fields or shades,
(ii) assigning to each colour or shade one or more gravure fields (3b) of identical orientation,
wherein
the orientation of a gravure field (3b) is determined by the orientation of the at least two parallel straight engraving lines (20) comprised in said gravure field (3b), such that each colour or shade determines a certain orientation of the gravure field (3b), and
the parallel straight engraving lines (20) assigned to gravure fields (3b) of different colours or shades do not have the same orientation,
c) preparing a mold according to claims 6 to 7; and
d) using the mold for preparing a molded food product.

11. Process according to claim 10, wherein step d) of using the mold for preparing a molded food product is performed according to claim 8 or 9.

## Patentansprüche

1. Geformtes Nahrungsmittelprodukt, vorzugsweise ein Süßwarenprodukt auf Fettbasis, wie z. B. ein Schokoladenprodukt, das auf seiner Oberfläche (1a) ein optisches Element (2a) präsentiert, das mindestens drei einander nicht überlappende Relieffelder (3a) umfasst, wobei jedes Relieffeld (3a) mindestens zwei parallele, gerade Kerblinien (4) aufweist, die eine Ausrichtung des Relieffelds (3a) bereitstellen, wobei die unterschiedlichen Relieffelder (3a) jeweils keine parallele Ausrichtung zueinander aufweisen; und wobei die Tiefe (5) der Kerblinien (4) von 0,03 mm bis 1 mm beträgt; und die Breite (6) der Kerblinien (4) von 0,1 mm bis 2,0 mm beträgt.

2. Geformtes Nahrungsmittelprodukt nach Anspruch 1, wobei die mindestens zwei parallelen, geraden Kerblinien (4) der mindestens drei einander nicht überlappenden Relieffelder (3a) in einem Winkel von mindestens 10° zueinander ausgerichtet sind.

3. Geformtes Nahrungsmittelprodukt nach einem der Ansprüche 1 oder 2, wobei die Kerblinien (4) so angeordnet sind, dass die drei Relieffelder (3) Licht auf unterschiedliche Weise reflektieren, so dass die drei unterschiedlichen Relieffelder (3) mit unterschiedlicher Helligkeit und/oder Farbe erscheinen.

4. Geformtes Nahrungsmittelprodukt nach einem der Ansprüche 1 bis 3, wobei die mindestens drei Relieffelder (3) auf eine Weise angeordnet sind, dass sie Licht auf unterschiedliche Weise reflektieren, so dass abhängig vom Blickwinkel unterschiedliche Bilder gebildet werden.

5. Geformtes Nahrungsmittelprodukt nach einem der Ansprüche 1 bis 4, wobei
(i) das Querschnittsprofil der Kerblinien (4) eine konkave (4a) oder konvexe Kurve (4b) ist; und/oder
(ii) die konkave (4a) oder konvexe Kurve (4b) der Kerblinien (4) **gekennzeichnet ist durch** einen tangentialen Winkel (10) von 40° bis 120°, wobei der tangentiale Winkel (10) bestimmt wird als der Winkel zwischen den Tangenten der konkaven (4a) oder konvexen Kurve (4b) der Kerblinie (4), die am Wendepunkt zwischen der konvexen Kurve der einkerbenden Linie (4b) und der konkaven Kurve des trennenden Abschnitts (8a) bzw. zwischen der konkaven Kurve der einkerbenden Linie (4a) und der konvexen Kurve des trennenden Abschnitts (8b) konstruiert werden.

6. Form, geeignet zum Herstellen eines geformten Nahrungsmittelprodukts, vorzugsweise eines Süßwarenprodukts, wie z. B. eines Schokoladenprodukts, die auf ihrer Oberfläche (1b) ein optisches Element (2b) präsentiert, das mindestens drei einander nicht überlappende Gravurfelder (3b) umfasst, wobei jedes Gravurfeld (3b) mindestens zwei gerade einkerbende Linien (20) aufweist, die eine Ausrichtung des Gravurfeldes (3b) bereitstellen, wobei die unterschiedlichen Gravurfelder (3b) keine parallele Ausrichtung zueinander aufweisen; und wobei
die Tiefe (5) der einkerbenden Linien (20) von 0,03 mm bis 1 mm beträgt; und die Breite (6) der einkerbenden Linien (20) von 0,1 mm bis 2,0 mm beträgt.

7. Form nach Anspruch 6, wobei
(i) das Querschnittsprofil der einkerbenden Linien (20) eine konvexe (20a) oder konkave Kurve (20b) ist; und/oder
(ii) die konvexe (20a) oder konkave Kurve (20b) der einkerbenden Linien (20) **gekennzeichnet ist durch** einen tangentialen Winkel (10) von 40° bis 120°, wobei der tangentiale Winkel (10) bestimmt wird als der Winkel zwischen den Tangenten der konkaven (20b) oder konvexen Kurve (20a) der Kerblinie (4), die am Wendepunkt zwischen der konvexen Kurve der einkerbenden Linie (4b) und der konkaven Kurve des trennenden Abschnitts (8a) bzw. zwischen der konkaven Kurve der einkerbenden Linie (4a) und der konvexen Kurve des trennenden Abschnitts (8b) konstruiert werden.

8. Verfahren zum Herstellen eines geformten Nahrungsmittelprodukts, vorzugsweise eines Süßwarenprodukts, wie z. B. eines Schokoladenprodukts, das Aufbringen eines optischen Elements (2a) nach einem der Ansprüche 1 bis 5 auf die Oberfläche (1a) des Produktes umfassend.

9. Verfahren nach Anspruch 8, die folgenden Schritte umfassend
a. Bereitstellen eines Nahrungsmittelprodukts bei einer Temperatur, bei der dieses in einem flüssigen Zustand ist;
b. Gießen des Nahrungsmittelmaterials in eine Form nach einem der Ansprüche 6 bis 7;
c. Verfestigen des Nahrungsmittelmaterials durch Kühlen; und
d. Entnehmen des verfestigten Nahrungsmittelprodukts aus der Form.

10. Verfahren zum Herstellen eines veränderlichen Bildes auf der Oberfläche eines geformten Nahrungsmittelprodukts, wobei das geformte Nahrungsmittelprodukt ein Produkt nach einem der Ansprüche 1 bis 4 ist, wobei das Verfahren die folgenden Schritte umfasst
a) Bereitstellen eines Bildes;
b) Umwandeln des Bildes in ein optisches Element (2b), welches das Bild darstellt, durch:
(i) Unterteilen des Bildes in unterschiedliche Farbfelder oder Farbtöne,
(ii) Zuordnen eines oder mehrerer Gravurfelder (3b) identischer Ausrichtung zu jeder Farbe oder jedem Farbton,
wobei
die Ausrichtung des Gravurfeldes (3b) durch die Ausrichtung der mindestens zwei in dem Gravurfeld (3b) enthaltenen parallelen, geraden einkerbenden Linien (20) bestimmt wird, so dass jede Farbe oder jeder Farbton eine bestimmte Ausrichtung des Gravurfeldes (3b) bestimmt, und
die parallelen, geraden einkerbenden Linien (20), die den Gravurfeldern (3b) unterschiedlicher Farben oder Farbtöne zugeordnet sind, nicht die gleiche Ausrichtung haben,
c) Herstellen einer Form nach den Ansprüchen 6 bis 7; und
d) Verwenden der Form zum Herstellen eines geformten Nahrungsmittelprodukts.

11. Verfahren nach Anspruch 10, wobei Schritt d) des Verwendens der Form zum Herstellen eines geformten Nahrungsmittelprodukts gemäß Anspruch 8 oder 9 durchgeführt wird.

## Revendications

1. Produit alimentaire moulé, de préférence un produit de confiserie à base de matière grasse tel que, par exemple, un produit à base de chocolat, présentant sur sa surface (1a) un élément optique (2a) comprenant au moins trois champs en relief ne se chevauchant pas (3a), chaque champ en relief (3a) ayant au moins deux lignes en retrait droites parallèles (4) fournissant une orientation du champ en relief (3a), dans lequel les champs en relief différents respectifs (3a) ne se trouvent pas dans une orientation parallèle l'un par rapport à l'autre ; et dans lequel la profondeur (5) des lignes en retrait (4) est de 0,03 mm à 1 mm ; et la largeur (6) des lignes en retrait (4) est de 0,1 mm à 2,0 mm.

2. Produit alimentaire moulé selon la revendication 1, dans lequel les au moins deux lignes en retrait droites parallèles (4) des au moins trois champs en relief ne se chevauchant pas (3a) sont orientées selon un angle d'au moins 10 ° l'une par rapport à l'autre.

3. Produit alimentaire moulé selon l'une quelconque des revendications 1 ou 2, dans lequel les lignes en retrait (4) sont agencées de sorte que les trois champs en relief (3) réfléchissent la lumière de manière différente, de sorte que les trois champs en relief différents (3) apparaissent avec une luminosité et/ou une couleur différentes.

4. Produit alimentaire moulé selon l'une quelconque des revendications 1 à 3, dans lequel les au moins trois champs en relief (3) sont agencés de manière à réfléchir la lumière de façon différente, de sorte que différentes images sont formées en fonction de l'angle de vue.

5. Produit alimentaire moulé selon l'une quelconque des revendications 1 à 4, dans lequel
(i) le profil en section transversale des lignes en retrait (4) est une courbe concave (4a) ou convexe (4b) ; et/ou
(ii) la courbe concave (4a) ou convexe (4b) des lignes en retrait (4) est **caractérisée par** un angle tangentiel (10) de 40 ° à 120 °, l'angle tangentiel (10) étant défini comme l'angle entre les tangentes de la courbe concave (4a) ou convexe (4b) des lignes en retrait (4) construites au point d'inflexion entre la courbe convexe de la ligne de gravure (4b) et la courbe concave de la partie de séparation (8a) ou entre la courbe concave de la ligne de gravure (4a) et la courbe convexe de la partie de séparation (8b), respectivement.

6. Moule adapté à la confection d'un produit alimentaire moulé, de préférence un produit de confiserie tel que, par exemple, un produit à base de chocolat, présentant sur sa surface (1b) un élément optique (2b) comprenant au moins trois champs de gravure ne se chevauchant pas (3b), chaque champ de gravure (3b) ayant au moins deux lignes de gravure droites parallèles (20) fournissant une orientation du champ de gravure (3b), dans lequel les différents champs de gravure (3b) ne se trouvent pas dans une orientation parallèle l'un par rapport à l'autre ; et dans lequel
la profondeur (5) des lignes de gravure (20) est de 0,03 mm à 1 mm ; et la largeur (6) des lignes de gravure (20) est de 0,1 mm à 2,0 mm.

7. Moule selon la revendication 6, dans lequel
(i) le profil en section transversale des lignes de gravure (20) est une courbe convexe (20a) ou concave (20b) ; et/ou
(ii) la courbe convexe (20a) ou concave (20b) des lignes de gravure (20) est **caractérisée par** un angle tangentiel (10) de 40 ° à 120 °, l'angle tangentiel (10) étant défini comme l'angle entre les tangentes de la courbe concave (20b) ou convexe (20a) des lignes en retrait (4) construites au point d'inflexion entre la courbe convexe de la ligne de gravure (4b) et la courbe concave de la partie de séparation (8a) ou entre la courbe concave de la ligne de gravure (4a) et la courbe convexe de la partie de séparation (8b), respectivement.

8. Procédé de confection d'un produit alimentaire moulé, de préférence un produit de confiserie tel que par exemple un produit à base de chocolat, comprenant l'application, sur la surface (1a) dudit produit, d'un élément optique (2a) tel que défini dans l'une quelconque des revendications 1 à 5.

9. Procédé selon la revendication 8, comprenant les étapes
a. de fourniture d'un produit alimentaire à une température à laquelle il se trouve à l'état liquide ;
b. de déversement du matériau alimentaire dans un moule selon l'une quelconque des revendications 6 à 7 ;
c. de solidification du matériau alimentaire par refroidissement ; et
d. de retrait du produit alimentaire solidifié du moule.

10. Procédé de préparation d'une image variable sur la surface d'un produit alimentaire moulé, dans lequel le produit alimentaire moulé est un produit selon l'une quelconque des revendications 1 à 4, ledit procédé comprenant les étapes consistant à
a) fournir une image ;
b) convertir l'image en un élément optique (2b) représentant l'image par :
(i) division de l'image en teintes ou champs de couleurs différentes,
(ii) attribution à chaque couleur ou teinte d'un ou de plusieurs champs de gravure (3b) d'orientation identique,
dans lequel
l'orientation d'un champ de gravure (3b) est définie par l'orientation des au moins deux lignes de gravure droites parallèles (20) comprises dans ledit champ de gravure (3b), de sorte que chaque couleur ou teinte définit une certaine orientation du champ de gravure (3b) et
les lignes de gravure droites parallèles (20) attribuées aux champs de gravure (3b) de différentes couleurs ou teintes n'ont pas la même orientation,
c) préparer un moule selon les revendications 6 à 7 ; et
d) utiliser le moule pour préparer un produit alimentaire moulé.

11. Procédé selon la revendication 10, dans lequel l'étape d) d'utilisation du moule pour préparer un produit alimentaire moulé est réalisée selon la revendication 8 ou 9.
